(19) **Europäisches Patentamt**
**European Patent Office**
**Office européen des brevets**

(11) **EP 4 143 502 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **21709974.6**

(22) Anmeldetag: **03.03.2021**

(51) Internationale Patentklassifikation (IPC):
*G01B 9/02* (2022.01)     *G02B 5/18* (2006.01)
*G01B 9/02015* (2022.01)     *G01B 9/02017* (2022.01)
*G01B 9/0209* (2022.01)     *G02B 27/42* (2006.01)

(52) Gemeinsame Patentklassifikation (CPC):
**G01B 9/02019; G01B 9/02028; G01B 9/0209; G02B 27/4227**

(86) Internationale Anmeldenummer:
**PCT/EP2021/055388**

(87) Internationale Veröffentlichungsnummer:
**WO 2021/219278 (04.11.2021 Gazette 2021/44)**

(54) **MIKROSKOPANORDNUNG UND VERFAHREN ZUM MESSEN EINER OBERFLÄCHENSTRUKTUR EINER PROBE**

MICROSCOPE ARRANGEMENT AND METHOD FOR MEASURING A SURFACE STRUCTURE OF A SAMPLE

SYSTÈME DE MICROSCOPE ET PROCÉDÉ DE MESURE D'UNE STRUCTURE DE SURFACE D'UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2020 DE 102020205523**

(43) Veröffentlichungstag der Anmeldung:
**08.03.2023 Patentblatt 2023/10**

(73) Patentinhaber: **Fraunhofer-Gesellschaft zur Förderung der angewandten Forschung e.V. 80686 München (DE)**

(72) Erfinder: **LI, Zheng 76131 Karlsruhe (DE)**

(74) Vertreter: **Pfenning, Meinig & Partner mbB Patent- und Rechtsanwälte Theresienhöhe 11a 80339 München (DE)**

(56) Entgegenhaltungen:
**DE-A1- 10 223 581**     **US-A1- 2011 279 823**

• **LI ZHENG ET AL: "Application of DOE in confocal microscopy for surface measurement", ENHANCED AND SYNTHETIC VISION 2003 : [CONFERENCE ENHANCED AND SYNTHETIC VISION 2002] ; 21 APRIL 2003, ORLANDO, FLORIDA, USA; [PROCEEDINGS OF SPIE ISSN 0277-786X], SPIE, US, vol. 11144, 17 September 2019 (2019-09-17), pages 1114411 - 1114411, XP060124582, ISBN: 978-1-5106-3673-6, DOI: 10.1117/12.2531610**

• **ZHANG GUOWEI ET AL: "Improvements of diffractive optical element uniformity and zero order performance using lithographic process parameter optimization method", ENHANCED AND SYNTHETIC VISION 2003 : [CONFERENCE ENHANCED AND SYNTHETIC VISION 2002] ; 21 APRIL 2003, ORLANDO, FLORIDA, USA; [PROCEEDINGS OF SPIE ISSN 0277-786X], SPIE, US, vol. 11188, 18 November 2019 (2019-11-18), pages 111880X - 111880X, XP060127342, ISBN: 978-1-5106-3673-6, DOI: 10.1117/12.2535466**

EP 4 143 502 B1

**Beschreibung**

Die Erfindung liegt auf dem Gebiet der optischen Messungen. Sie betrifft unter anderem eine Mikroskopanordnung sowie ein Verfahren zum Messen einer Oberflächenstruktur einer Probe. Sie betrifft ferner ein diffraktives optisches Element.

Mit der fortschreitenden Entwicklung von Nanotechnologien wächst auch der Bedarf an genauen Messmethoden bzw. Messvorrichtungen, die eine besonders gute Vermessung von Oberflächen erlauben.

Zum Stand der Technik gehören in diesem Gebiet etwa mechanische Abtastsysteme, optische Systeme, Elektronenmikroskope oder Rasterkraftmikroskope. Während die letzteren beiden Optionen eine besonders gute Auflösung bieten, erfordern sie ein spezielles Laborumfeld sowie eine aufwendige Probenpräparation, was sie teuer und unflexibel macht. Abtastsysteme sind auf der anderen Seite nicht dazu geeignet, empfindliche Proben zu vermessen.

Optische Systeme stellen hingegen eine vergleichsweise günstige und probenschonende Alternative dar. Herkömmliche optische Mikroskope bieten aber nur eine Auflösung im Mikrometerbereich.

Entwicklungen aus jüngster Zeit schlagen die Verwendung eines diffraktiven optischen Elements in Mikroskopaufbauten zum Vermessen von Oberflächen vor. Beispielsweise ist eine derartige Technologie in der Publikation "Application of DOE in confocal microscopy for surface measurement" von Z. Li et al., in Photonics and Education in Measurement Science 2019 gezeigt.

Die Publikation "Improvements of diffractive optical element uniformity and zero order performance using lithographic process parameter optimization method" von Zhang Guowei et al., in Enhanced and Synthetic Vision 2003, 21. April 2003, Orlando, Florida befasst sich mit der Optimierung von diffraktiven optischen Elemente, auf der Grundlage einer Divergenzlicht-Methode.

DE 102 23 581 A1 zeigt System zur interferometrischen Passeprüfung der Oberfläche eines Testobjektes mit einem Interferometer und einem optischen Element mit einer aus zwei sich streifenweise abwechselnden Unterstrukturen zusammengesetzten diffraktiven Struktur auf einer Fläche,, welches in Reflexion durch Beugung der einfallenden Lichtwelle an der Unterstruktur die zu dieser konjugierte Referenzwelle erzeugt, und welches in Transmission durch Beugung der einfallenden Lichtwelle an der Unterstruktur, gefolgt von senkrechter Rückreflexion an der asphärischen Oberfläche und erneuter Beugung an der Unterstruktur in Transmission die Testwelle erzeugt und der Referenzwelle überlagert.

US 2011/279823 A1 zeigt, dass schwach kohärentes Licht aus einer Weißlichtquelle auf eine Probenoberfläche gestrahlt wird. Eine Umweglänge in einem Umwegabschnitt wird so eingestellt, dass die optische Wegdifferenz zwischen dem Referenzlicht und dem Probenlicht gleich oder kürzer ist als die Kohärenzlänge des Interferenzlichts. Das Interferenzlicht fällt nur dann auf einen Bildsensor, wenn ein Neigungswinkel einer Beugungsgitterplatte und eine Wellenlänge des Interferenzlichts eine vorgegebene Bedingung erfüllen. Auf diese Weise wird ein Interferenzstreifenbild erzeugt. Basierend auf jedem der Interferenzstreifenbilder, die auf einer Wellenlängenbasis des Interferenzlichts und einem optischen Abstand zwischen einer Referenzoberfläche und der Probenoberfläche entlang eines optischen Pfades eines Messlichts zum Zeitpunkt der Aufnahme des Interferenzstreifenbildes aufgenommen werden, wird eine Form der Probenoberfläche vermessen.

Aufgabe der Erfindung ist es, die genannten Nachteile des Stands der Technik zu überwinden und ein vergleichsweise günstiges und dabei möglichst genaues und gleichzeitig schonendes Vermessen von Probenoberflächen zu ermöglichen.

Das wird durch eine Mikroskopanordnung gemäß Anspruch 1 oder durch ein Verfahren gemäß Anspruch 13 erreicht. Vorteilhafte Weiterbildungen ergeben sich aus den Unteransprüchen sowie aus der nachfolgenden Beschreibung und den Figuren.

Die Mikroskopanordnung zum Messen einer Oberflächenstruktur einer Oberfläche einer Probe umfasst ein diffraktives optisches Element (DOE), einen Laser zum Erzeugen eines Lichtstrahls, einen Probenhalter, einen Detektor und die Probe.

Die Probe ist dabei in dem Probenhalter platziert. Das DOE ist derart ausgebildet und im Strahlengang des Lichtstrahls und relativ zur Probe angeordnet, dass es einen Teil des Lichtstrahls als aufgefächerte Messstrahlen transmittiert, die auf der Oberfläche der Probe einen Spot-Array erzeugen. Weiterhin ist das DOE derart ausgebildet ist, dass es einen weiteren Teil des Lichtstrahls reflektiert, um mehrere Referenzstrahlen zu bilden. Die Probe und das DOE sind zueinander derart positioniert, dass mindestens ein von der Probe durch das DOE hindurch zurückgeworfener Messstrahl mit jeweils einem der Referenzstrahlen ein überlagertes Strahlenpaar bildet.

Der Detektor ist eingerichtet und angeordnet, um ein Interferenzmuster der derart überlagerten Strahlenpaare aus zurückgeworfenem Messstrahl und Referenzstrahl zu erfassen.

Das Verfahren zum Messen einer Oberflächenstruktur einer Oberfläche einer Probe kann insbesondere unter Verwendung der oben beschriebenen Mikroskopanordnung geschehen.

In dem Verfahren werden ein diffraktives optisches Element (DOE), ein Laser zum Erzeugen eines Lichtstrahls, ein Probenhalter und ein Detektor bereitgestellt.

Die Probe wird in dem Probenhalter platziert und ein Lichtstrahl des Lasers auf das DOE geleitet, wobei das DOE derart ausgebildet ist und angeordnet wird, dass es einen Teil des Lichtstrahls als aufgefächerte Messstrahlen transmittiert, um auf der Oberfläche der Probe einen Spot-Array zu erzeugen. Weiterhin ist das DOE derart ausgebildet, dass es einen weiteren Teil des Lichtstrahls reflektiert, um mehrere Referenzstrahlen zu bilden.

Die Probe und das DOE werden zueinander derart positioniert, dass von der Probe durch das DOE hindurch zurückgeworfene Messstrahlen des Spot-Arrays mit jeweils einem Referenzstrahl ein überlagertes Strahlenpaar bilden.

Mittels des Detektors werden Interferenzmuster der derart überlagerten Strahlenpaare aus zurückgeworfenen Messstrahlen und Referenzstrahlen erfasst.

Es versteht sich, dass bei dem Verfahren optional auch Mikroskopanordnungen mit den zusätzlichen Merkmalen der weiteren hier beschriebenen Ausführungsbeispiele der Mikroskopanordnung zum Einsatz kommen können.

Bei der Mikroskopanordnung sowie in dem Verfahren werden Interferenzeffekte ausgenutzt. Durch die Mikroskopanordnung sowie das Verfahren können Messungen mit hoher axialer sowie lateraler Genauigkeit ermöglicht werden. Beispielsweise wird dadurch die Vermessung einer Oberfläche, insbesondere von Oberflächenstrukturen auf einer Nanometer-Skala, ermöglicht. Dazu zählen beispielsweise Oberflächenrauigkeiten oder Halbeiterstrukturen mit entsprechenden Abmessungen.

In der Mikroskopanordnung bzw. in dem Verfahren kann vorteilhaft ein Crosstalk zwischen benachbarten Spots vermieden werden, indem ein konfokales Prinzip verwendet wird. Überdies ist es möglich, aufgrund einer hohen numerischen Apertur der mittels DOE erzeugten Spots, eine bessere laterale Auflösung zu erreichen. Zudem kann die Verwendung verhältnismäßig günstiger Objektive mit niedriger numerischer Apertur ermöglicht werden.

Die Anmeldung offenbart ein diffraktives optisches Element (DOE) zur Verwendung in einem Mikroskop zum Messen einer Oberflächenstruktur einer Oberfläche einer Probe.

Dieses ist dazu eingerichtet, einen Teil eines auf das DOE treffenden Lichtstrahls als aufgefächerte Messstrahlen zu transmittieren und einen weiteren Teil des Lichtstrahls zu reflektieren, um für jeden Messstrahl einen Referenzstrahl zu bilden.

Das DOE kann eine reflektierende Oberflächenbeschichtung aufweisen und/oder einen Reflexionsgrad von mindestens 5 % und von höchstens 50 % besitzen.

Diese besondere Ausgestaltung des DOE bewirkt besonders vorteilhafte Mess- und Referenzstrahlen, die eine besonders gute Ausnutzung von Interferenzeffekten erlauben.

In dem Verfahren kann beispielsweise mit dem Spot-Array die Oberfläche der Probe abgerastert werden, indem eine Relativbewegung von Spot-Array und Probe bewirkt wird. Dadurch kann mit den Messstrahlen nach und nach die Oberfläche der Probe abgefahren werden. Zur Durchführung des Verfahrens kann die Probe während der Messung beispielsweise lateral und/oder axial bewegt werden. Dadurch kann die Oberfläche der Probe abgerastert und somit vermessen werden. Alternativ oder zusätzlich können zum auch Komponenten der Mikroskopanordnung relativ zur Probe bewegt werden, wobei diese Komponenten insbesondere das DOE umfassen können.

Der Probenhalter kann die Position der Probe innerhalb der Mikroskopanordnung, insbesondere relativ zum DOE festlegen und/oder die Probe gegen ungewolltes Verrutschen sichern. Der Probenhalter kann an die Probe angepasst oder anpassbar sein. Er kann überdies ein Bewegen der Probe während der Messung ermöglichen.

Beispielsweise eines oder beide von Probenhalter und DOE können einstellbar sein, um ein Herbeiführen der Überlagerung von Messstrahl bzw. Messstrahlen und Referenzstrahl bzw. Referenzstrahlen zu ermöglichen. Es können alternativ oder zusätzlich auch ein möglicher Strahlteiler und/oder ein oder mehrere zusätzliche optische Systeme zu diesem Zweck einstellbar sein. Probenhalter und/oder Strahlteiler und/oder DOE und/oder zusätzliche(s) optisches System(e) können Einstellmittel aufweisen bzw. damit verbunden sein, wobei die Einstellmittel ein Herbeiführen der Überlagerung der Strahlen ermöglichen. Die Überlagerung kann beispielsweise durch Bedienen der Einstellmittel durch den Benutzer herbeiführbar sein. Der Benutzer kann während dem Einstellen ein vom Detektor erzeugtes Signal überwachen und auf dessen Grundlage die Einstellung vornehmen. Die Einstellmittel können händisch oder elektrisch verstellbar sein. Weitere Elemente der Mikroskopanordnung wie etwa mögliche zusätzliche optische Systeme oder Linsen, können ebenfalls einstellbar sein.

Bei der Mikroskopanordnung kann vorgesehen sein, dass ein Abstand zwischen benachbarten Spots des Spot-Arrays höchstens 1mm und/oder mindestens 1 $\mu$m beträgt. Alternativ oder zusätzlich kann der Spot-Array mindestens 50 oder mindestens 100 Spots oder mindestens 200 Spots umfassen. Die Spots des Spot-Arrays können z.B. auf einer Linie oder in einem rechteckigen Gitter oder in einem dreieckigen Gitter oder in einem hexagonalen Gitter oder in einer Nipkow-Scheibe angeordnet sein. In einem Beispiel kann der Spot Array aus 11x11 Spots bestehen, die in einem Rechteckgitter angeordnet sind.

Beispielsweise wird für jeden Messstrahl des Spot-Arrays ein Referenzstrahl zur Erzeugung eines Strahlenpaares gebildet. Insbesondere kann es vorgesehen sein, dass mehrere Strahlenpaare, insbesondere alle Strahlenpaare, vom Detektor gleichzeitig erfasst werden. Der Detektor kann ein optisches System, wie zum Beispiel Linsen, und/oder einen Sensor, wie zum Beispiel eine Kamera oder einen Kamerasensor oder eine Photodiodenanordnung, umfassen. Der Detektor kann eine Kamera umfassen. Das optische System kann das eine oder die mehreren überlagerten Strahlenpaare auf den Sensor abbilden. Der Sensor ist dazu ausgebildet, beispielsweise die Helligkeit des dort durch die Strahlenpaare generierten Bildes zu erfassen. Wenn es mehrere Strahlenpaare gibt, können diese durch das optische System an unterschiedlichen Orten des Sensors abgebildet werden und auf diese Weise gleichzeitig und durch ihre räumliche Anordnung voneinander unterscheidbar detektiert werden.

Das DOE kann unter Verwendung der Rayleigh-Sommerfeld Integral-Methode designt sein. Ein Reflexionsgrad des DOE kann beispielsweise mindestens 2 %, vorzugsweise mindestens 5 % und/oder höchstens 50 % betragen.

Das DOE kann lithographisch hergestellt sein.

Das DOE kann eine reflektierende Oberflächenbeschichtung aufweisen. Die Oberflächenbeschichtung kann beispielsweise eine oder zwei oder drei oder vier oder fünf Materiallagen umfassen. Alternativ oder zusätzlich kann die Oberflächenbeschichtung MgF2 oder Al2O3 oder Ta205 enthalten. Insbesondere können dabei Materiallagen vorgesehen sind, die jeweils aus einem dieser Materialien bestehen. Das DOE kann aus Glas, insbesondere aus Quarzglas, gefertigt sein. Weiterhin kann das DOE ein Höhenprofil mit mindestens 2 verschiedenen Höhen und/oder mit höchstens 16 verschiedenen Höhen aufweist. Insbesondere kann es genau 2 verschiedenen Höhen oder genau 3 verschiedenen Höhen oder genau 4 verschiedenen Höhen aufweisen.

Der Laser kann dazu eingerichtet sein, den Lichtstrahl im sichtbaren Frequenzbereich oder im infraroten Frequenzbereich, insbesondere im nahinfraroten Frequenzbereich, zu erzeugen.

Die Mikroskopanordnung kann einen Strahlteiler umfassen.

Es sei nochmals darauf hingewiesen, dass die im Zusammenhang mit der Mikroskopanordnung beschriebenen Merkmale auch im Zusammenhang mit dem Verfahren beansprucht werden können und umgekehrt.

Im Folgenden wird die Erfindung anhand von Figuren näher erläutert.

Darin zeigen

Fign. 1a,b    Mikroskopanordnungen,
Fign. 2a, b   eine Erzeugung von Messstrahlen und Referenzstrahlen mittels eines diffraktiven optischen Elements (DOE),
Fign. 3a-c    diffraktive optische Elemente (DOEs) und
Fig. 4        ein in der Mikroskopanordnung erzeugtes Interferenzmuster.

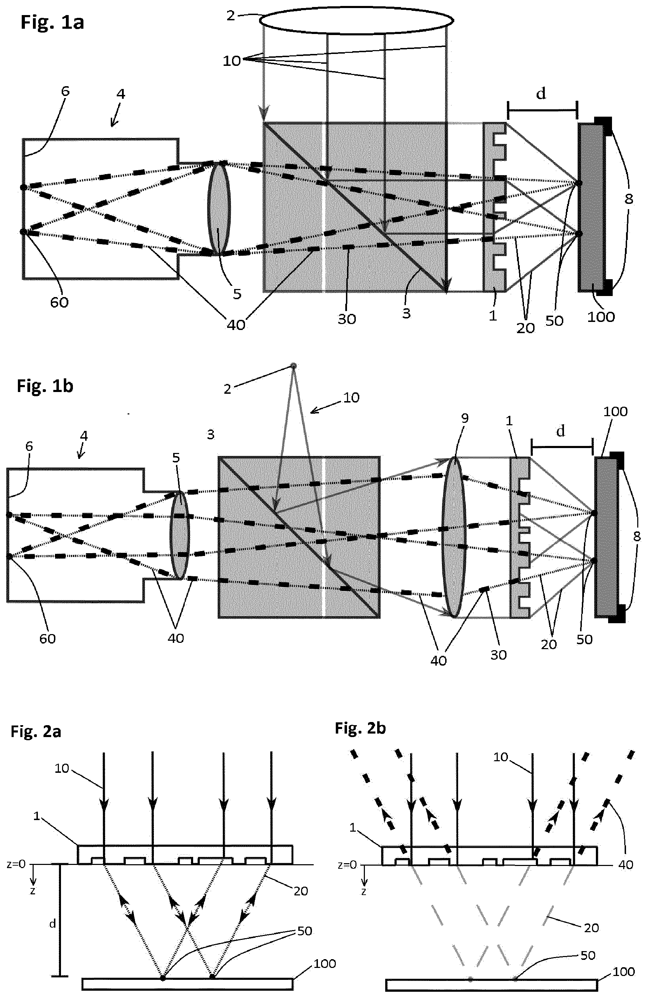

Figuren 1a und 1b zeigen schematische Mikroskopanordnungen, die jeweils ein Mikroskop und eine darin befindliche Probe 100 umfassen.

Zum Messen einer Oberflächenstruktur einer Oberfläche einer Probe 100 wird in den Mikroskopanordnungen jeweils ein diffraktives optisches Element (DO-E) 1 bereitgestellt.

Die Mikroskopanordnungen umfassen neben dem diffraktiven optischen Element 1 einen Laser 2 zum Erzeugen eines Lichtstrahls 10, vorzugsweise im sichtbaren oder infraroten, insbesondere nahinfraroten Frequenzbereich. Der Lichtstrahl 10 des Lasers 2 wird über einen Strahlteiler 3 auf das DOE 1 gelenkt.

Im Fall der Figur 1a erzeugt der Laser eine ebene Welle, die schließlich auf das DOE 1 umgelenkt wird. Im Fall der Figur 1b wird als Laser 2 eine Punktquelle verwendet. Dabei befindet sich zwischen Strahlteiler 3 und DOE 1 noch ein zusätzliches optisches System 9 in Form eines Objektivs, das als Kollimator wirkt und eine Beleuchtung des DOE 1 mittels einer ebenen Welle bewirkt. Das Objektiv kann zum Beispiel endlich konjugiert oder unendlich konjugiert sein.

Beide Vorrichtungen haben gemeinsam, dass bei ihrer Verwendung der Lichtstrahl 10 des Lasers 2 schließlich auf das DOE 1 gelangt und dort zum Teil als aufgefächerte Messstrahlen 20 transmittiert wird, die auf die zu vermessende Oberfläche der in einem Probenhalter 8 positionierten Probe 100 gelangen und dort einen Spot-Array 50 erzeugen. Zu Illustrationszwecken sind in den gezeigten Ansichten jeweils nur 2 Spots des Spot-Arrays dargestellt. Mögliche Ausgestaltungen des Spot-Arrays werden später noch näher erläutert.

Die aufgefächerten transmittierten Messstrahlen 20, die vom DOE 1 in Richtung der Probe 100 propagieren, sind in Figuren 1a und 1b als durchgezogene Linien dargestellt. Sie werden von der Probe reflektiert 20 und durch das DOE hindurch zurückgeworfen. Die von der Probe zurückgeworfenen Messstrahlen werden in den Figuren 1a und 1b durch fein unterbrochene Linien dargestellt.

Das DOE 1 reflektiert überdies einen weiteren Teil des Lichtstrahls 10 und bildet auf diese Weise Referenzstrahlen 30, dargestellt durch fette gestrichelte Linien.

Die Probe 100 ist relativ zu den Komponenten des Mikroskops derart angeordnet dass die von der Probe 100 durch das DOE 1 hindurch zurückgeworfener Messstrahlen 20 jeweils einem der Referenzstrahlen 30 ein überlagertes Strahlenpaar 40 bildet. Die fette gestrichelte Linie und die fein unterbrochene Linie überlagern sich dann dementsprechend.

Die Strahlenpaare 40 passieren den Strahlteiler 3 und gelangen zu einem Detektor 4. Dieser umfasst ein optisches System 5, durch welches die Strahlen auf einen Sensor 6 des Detektors geleitet werden. Das optische System 5 kann im Fall der Figur 1a beispielsweise ein Objektiv oder eine Linse sein. Beispielsweise im Fall der Figur 1b kann es sich insbesondere um eine Tubuslinse handeln, die auf das zusätzliche optische System 9 abgestimmt ist.

Auf dem Sensor 6 des Detektors werden auf diese Weise sämtliche Strahlenpaare, räumlich voneinander getrennt, registriert. Dabei wird für jedes der dort auftreffenden Strahlenpaare 40 ein Interferenzmuster 60 erfasst.

Die Probe 100 kann zum Vermessen der Oberfläche lateral und axial bewegt werden, wobei sich die auf dem Sensor 6 registrierten Interferenzmuster 60 in Reaktion auf die Bewegung der Probe ändern, bedingt beispielsweise durch Unebenheiten oder Strukturen, die sich auf der Oberfläche der Probe 100 befinden.

Bei der Verwendung der Vorrichtung kann ein Ausrichten der Probe 100 und der weiteren Komponenten des Mikroskops zueinander stattfinden, mit dem Ziel, die Strahlen zur Erzeugung der Strahlenpaare 40 in Überlagerung zu bringen. Dabei kann es sein, dass er zurückgeworfene Messstrahl 20 und der reflektierte Referenzstrahl 30 zunächst zwei gegeneinander verschobene Sets von Punkten im vom Sensor erfassten Bild erzeugen. Durch Einstellung der Komponenten des Mikroskops sowie durch Positionierung der Probe können die Sets von Punkten relativ zueinander bewegt werden, bis sie koinzidieren, und entsprechend die Messstrahlen 20 und Referenzstrahlen 30 miteinander zu Strahlenpaaren 40 überlagert sind.

Anhand der Figuren 2a und 2b werden physikalische Aspekte der Mikroskopanordnung und des Verfahrens beispielhaft diskutiert.

In der Figur 2a ist die Erzeugung des Spot-Arrays 50 auf der Probenoberfläche illustriert, wobei der Lichtstrahl 10 am DOE 1 gebeugt wird und im Arbeitsabstand d auf die Probe 100 trifft.

Figur 2b zeigt zudem den am DOE 1 zurückgestreuten Anteil des Lichtstrahls 10, der den Referenzstrahl 40 bildet.

Der Lichtstrahl 10 trifft dabei als ebene Welle auf das DOE 1, das sich an einem Ort z=0 befindet.

Für den Lichtstrahl 10 gilt die Wellenfunktion einer ebenen Welle:

$$u_{plane}=Ae^{ikz},$$

wobei $\lambda$ die Wellenlänge bezeichnet und $k=2\pi/\lambda$.

Der transmittierte Teil des Lichts unterläuft eine Beugung erster Ordnung, wobei sich seine Phase ändert. Dieser Teil des Lichts wird zum Messstrahl 20 mit Wellenfuntkion

$$u_{Mess,in}=\eta_1 Ae^{(i\phi(x,y)+ikz)}.$$

Dabei ist $\phi(x,y)$ durch die Ausgestaltung des DOE 1 definiert und $\eta_1$ ist der Beugungskoeffizient erster Ordnung.

Der Messstrahl propagiert, trifft auf die Probe 100, die sich im Abstand d zum DOE1 befindet, und wird von dort mit einem Phasensprung $\pi$ reflektiert, wobei der Reflexionskoeffizient der Probe durch $\eta_{Probe}$ gegeben ist.

Der reflektierte Messstrahl 20 läuft zurück zum DOE 1 am Ort z=0. Dort ist die Beugung nullter Ordnung von Bedeutung, bei der der Strahl das DOE 1 mit dem Beugungskoeffizienten nullter Ordnung, gegeben durch $\eta_0$, passiert.

Die Welle hat, wenn sie dort ankommt, die Distanz 2d zurückgelegt und einen Phasensprung von $\pi$ akkumuliert. Ihre Richtung ist entgegengesetzt.

So ergibt sich für den zurücklaufenden, durch das DOE 1 zurückgeworfenen Messstrahl 20 die Wellengleichung

$$u_{Mess,refl}=\eta_0\eta_{Probe}\eta_1 Ae^{(-i\phi(x,y)-ikz-i(2kd+\pi))}.$$

Weiterhin entsteht der Referenzstrahl 40, indem ein Anteil des als ebene Welle einlaufenden Lichtstrahls 10 am DOE 1 bei z=0 reflektiert wird (vgl. Fig 2b).

Für den Referenzstrahl 40 gilt die Wellengleichung

$$u_r=\eta_r Ae^{(-i\phi(x,y)-ikz)},$$

wobei $\eta_r$ der Reflexionskoeffizient des DOE 1 ist. Der zurückgeworfene Messstrahl 20 und der Referenzstrahl 30 unterscheiden sich also durch einen Phasenunterschied von $i(2kd+\pi)$.

Die vom Detektor 4 detektierte Intensität ist demnach $I=| u_r + u_{Mess,refl} |^2$.

Wenn die Probe 100 um $\Delta d$ in die z-Richtung bewegt wird oder bei einer lateralen Bewegung der Probe aufgrund von Oberflächenbeschaffenheiten für den Messstrahl 20 ein Distanzunterschied von $\Delta d$ zwischen Probe 100 und DOE 1 bewirkt wird, bleibt der Referenzstrahl 40 unbeeinflusst, während sich für den zurücklaufenden, durch das DOE 1 zurückgeworfenen Messstrahl 20 die Wellengleichung

$$u'_{Mess,refl}=\eta_0\eta_{Probe}\eta_1 Ae^{(-i\phi(x,y)-ikz-i(2k(d+\Delta d)+\pi))}.$$

Das Signal im Detektor 4 ergibt sich dann zu $I=| u_r + u'_{Mess,refl} |^2$.

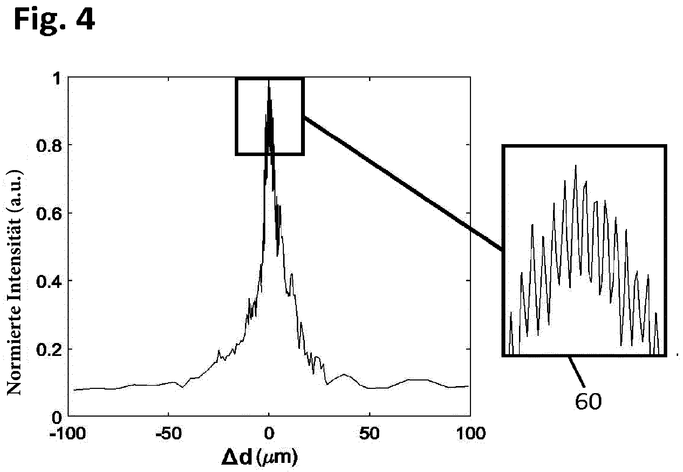

Ein $\Delta d$ von nur einem Viertel der Laserwellenlänge kann eine Veränderung des im Detektor 4 erfassten Signals von einem Spitzenwert auf einen Talwert bewirken, was zu einer sehr hohen Messgenauigkeit führt (siehe hierzu auch Figur 4).

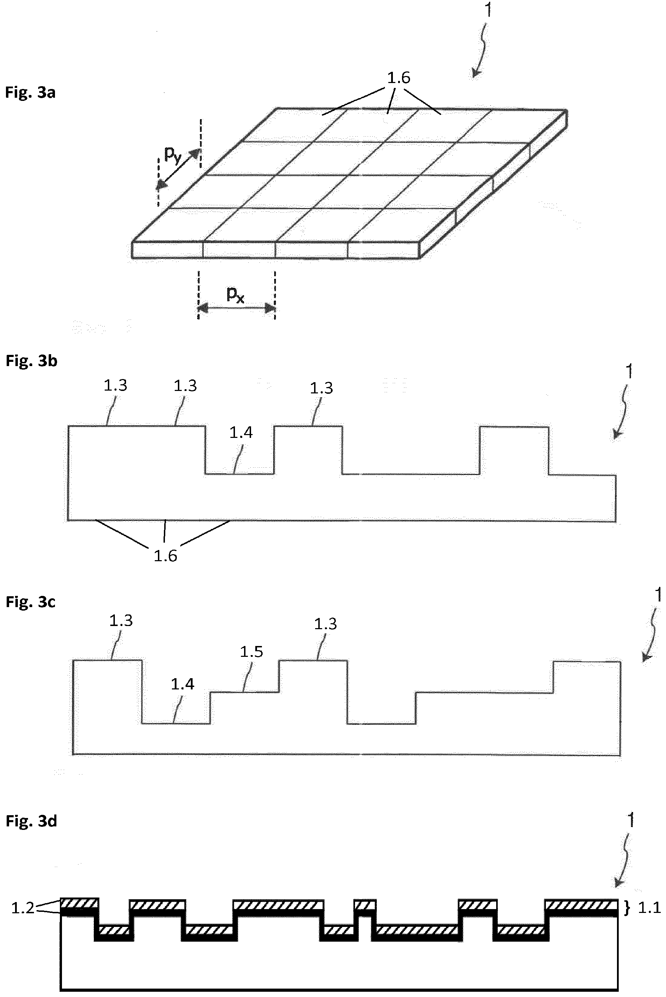

Anhand der Figuren 3a bis d wird das DOE 1 näher erläutert, das in dem Mikroskop bzw. in dem Verfahren zum Einsatz kommen kann.

Figur 3a zeigt eine perspektivische Ansicht. Darin sind exemplarisch 4x4 Zellen 1.6 gezeigt. Die Zellen 1.6 illustrieren diejenigen Bereiche, innerhalb derer bestimmt optische Eigenschaften vorliegen, die sich von denen einer Nachbarzelle unterscheiden können. Insbesondere die Dicke des DOE 1 kann von Zelle zu Zelle variieren. Es sei betont, dass die 16 Zellen 1.6 nur zu Illustrationszwecken dienen. Typischerweise liegt die Anzahl Zellen beispielsweise in der Größenordnung 10^3 Zellen, bis hin zur Größenordnung 10^5, 10^6 oder beispielsweise sogar 10^7 Zellen. Die Zellen haben in x-Richtung einen Pitch $p_x$ und in y-Richtung einen Pitch $p_y$.

Das DOE 1 ist aus Glas, insbesondere aus Quarzglas, gefertigt. Bei der Herstellung des DOE werden die optischen Eigenschaften der einzelnen Zellen eingestellt. Um das DOE 1 zu designen wird beispielsweise eine Beugungs-Simulation verwendet, wobei insbesondere die Rayleigh-Sommerfeld Integral-Methode verwendet wird. Hinsichtlich weiterer Details, die das DOE-Design betreffen, wird auf die eingangs zitierte Publikation von Li et al. verwiesen.

Beim hier vorgestellten DOE 1 kann es sich also beispielsweise um ein diffraktives optisches Element der dort vorgestellten Art handeln, welches ggf. auf die im Rahmen der vorliegenden Anmeldung vorgestellte Weise modifiziert ist.

Das DOE 1 kann derart beschaffen sein, dass ein Abstand zwischen benachbarten Spots des Spot-Arrays 50 höchstens 1mm und/oder mindestens 1 μm beträgt. Außerdem umfasst der Spot-Array zum Beispiel mindestens 100 oder mindestens 200 Spots. Die Spots können auf einer Linie oder in einem rechteckigen Gitter oder in einem dreieckigen Gitter oder in einem hexagonalen Gitter oder in einer Nipkow-Scheibe angeordnet sind.

Ein Reflexionsgrad des DOE 1 kann z.B. mindestens 5 % und/oder höchstens 50 % betragen.

Fign. 3b und 3c zeigen Schnittansichten durch Ausgestaltungen DOE 1, wobei jeweils 8 nebeneinanderliegende Zellen 1.6 sichtbar sind. Die gezeigten DOE 1 weisen Höhenprofile auf.

In der Figur 3b besitzen die ersten zwei nebeneinanderliegenden Zellen beide eine erste Höhe 1.3. Die darauffolgende Zelle hat eine zweite Höhe 1.4, die geringer ist als die erste Höhe. Sie wird gefolgt von einer Zelle, die wieder die erste Höhe 1.3 aufweist usw. Sämtliche Zellen haben entweder die erste Höhe 1.3 oder die zweite Höhe 1.4.

Im Fall der Ausgestaltung des DOE 1 aus Fig. 3c sind genau drei verschiedene Höhen vorhanden. Eine erste Höhe 1.3, eine zweite Höhe 1.4, die geringer ist als die erste Höhe und eine dritte Höhe 1.5, die zwischen der ersten und der zweiten Höhe liegt.

Ausgestaltungen des DOE 1 können auch genau 4 verschiedenen Höhen oder auch noch mehr verschiedenen Höhen haben. Beispielsweise können sie bis zu 16 verschiedene Höhen haben.

In Figur 3d ist das DOE 1 gezeigt, wobei auf einer Seite eine reflektierende Oberflächenbeschichtung 1.1 aufgebracht ist. Die Oberflächenbeschichtung 1.1 dient dazu, einen Reflexionsgrad des DOE 1 einzustellen. Im vorliegenden Beispiel umfasst die Oberflächenbeschichtung 1.1 zwei Materiallagen, sie kann aber auch nur eine umfassen oder beispielsweise bis zu fünf.

Jede Materiallage besteht zum Beispiel aus MgF2 oder Al2O3 oder Ta2O5.

Der Reflexionsgrad der beschichteten DOE 1 gemäß Figur 3d kann zum Beispiel zwischen 30 % und 50 % betragen.

Figur 4 zeigt das Ergebnis einer Messung, bei der die Probe 100 in einem Mikroskop mit dem in Figur 1a gezeigten Aufbau positioniert wurde. Die verwendete Wellenlänge beträgt 785 nm. Das optische System 5 ist ein Objektiv mit einer numerischen Apertur von 0,3. Die numerische Apertur der mit dem DOE 1 erzeugten Spots ist 0,73. des Der Graph zeigt die mit dem Sensor 6 des Detektors 4 erfasste Intensität eines Strahlenpaares 40, aufgetragen über eine Distanzänderung Δd zwischen Probe 100 und DOE 1, d.h. eine axiale Bewegung der Probe 100 in die z-Richtung. Als Resultat dieser axialen Bewegung zeichnet sich ein Interferenzmuster 60 in Form von Oszillationen ab. Das Interferenzmuster 60 ist einem konfokalen Peak überlagert. Diese hochfrequenten Oszillationen können die Messungenauigkeit verringern und eine Auflösung des axialen konfokalen Signals erhöhen und so eine verlässlichere Messung ermöglichen.

Bezugszeichenliste

| 1 | Diffraktives optisches Element (DOE) |
|---|---|
| 1.1 | Oberflächenbeschichtung des DOE |
| 1.2 | Materiallage |
| 1.3 | Erste Höhe |
| 1.4 | Zweite Höhe |
| 1.5 | Dritte Höhe |
| 1.6 | Zellen |
| 2 | Laser |
| 3 | Strahlteiler |
| 4 | Detektor |
| 5 | Optisches System |
| 6 | Sensor |
| 8 | Probenhalter |
| 9 | Zusätzliches optisches System |
| 10 | Lichtstrahl |
| 20 | Messstrahl |
| 30 | Referenzstrahl |
| 40 | Strahlenpaar |
| 50 | Spot-Array |
| 60 | Interferenzmuster |
| 100 | Probe |
| d | Arbeitsabstand |
| $p_x$ | Pitch |
| $p_y$ | Pitch |

**Patentansprüche**

1. Mikroskopanordnung zum Messen einer Oberflächenstruktur einer Oberfläche einer Probe (100), umfassend

ein diffraktives optisches Element (1),
einen Laser (2) zum Erzeugen eines Lichtstrahls (10), einen Probenhalter (8),
einen Detektor (4) mit einem Sensor (6) und
die Probe (100),

wobei

die Probe (100) in dem Probenhalter (8) platziert ist, **dadurch gekennzeichnet, dass**
das diffraktive optische Element (1) derart ausgebildet und im Strahlengang des Lichtstrahls (10) und relativ zur Probe (100) derart angeordnet ist, dass es einen Teil des Lichtstrahls (10) als aufgefächerte Messstrahlen (20) transmittiert, die auf der Oberfläche der Probe (100) einen Spot-Array (50) erzeugen,
das diffraktive optische Element (1) weiterhin derart ausgebildet ist, dass es einen weiteren Teil des Lichtstrahls (10) reflektiert, um mehrere Referenzstrahlen (30) zu bilden, wobei für jeden Messstrahl (20) des Spot-Arrays (50) ein Referenzstrahl (30) zur Erzeugung von Strahlenpaaren (40) gebildet wird,
wobei die Probe (100) und das diffraktive optische Element (1) zueinander derart positioniert sind, dass mehrere von der Probe (100) durch das diffraktive optische Element (1) hindurch zurückgeworfene Messstrahlen (20) mit jeweils einem der Referenzstrahlen (30) ein überlagertes Strahlenpaar (40) bilden,
so dass die zurückgeworfenen Messstrahlen (20) mit den reflektierten Referenzstrahlen (30) auf dem Sensor (6) zwei koinzidierende Sets von Punkten erzeugen,
und wobei
der Detektor (4) eingerichtet und angeordnet ist, sämtliche auf dem Sensor (6) auffallende Strahlenpaare räumlich voneinander getrennt zu registrieren, und Interferenzmuster (60) für jedes der derart überlagerten Strahlenpaare (40) aus zurückgeworfenem Messstrahl (20) und Referenzstrahl (30) zu erfassen.

2. Mikroskopanordnung gemäß Anspruch 1, wobei ein Abstand zwischen benachbarten Spots des Spot-Arrays (50) höchstens 1mm und/oder mindestens 1 $\mu$m beträgt und/oder wobei der Spot-Array (50) mindestens 50, vorzugsweise mindestens 100 Spots, besonders bevorzugt mindestens 200 Spots umfasst.

3. Mikroskopanordnung gemäß einem der vorhergehenden Ansprüche, wobei alle Strahlenpaare vom Detektor (4) gleichzeitig erfasst werden.

4. Mikroskopanordnung gemäß einem der vorhergehenden Ansprüche, wobei die Spots des Spot-Arrays (50) auf einer Linie oder in einem rechteckigen Gitter oder in einem dreieckigen Gitter oder in einem hexagonalen Gitter oder in einer Nipkow-Scheibe angeordnet sind.

5. Mikroskopanordnung gemäß einem der vorhergehenden Ansprüche, wobei das diffraktive optische Element (1) unter Verwendung der Rayleigh-Sommerfeld Integral-Methode hergestellt ist.

6. Mikroskopanordnung gemäß einem der vorhergehenden Ansprüche, wobei ein Reflexionsgrad des diffraktiven optischen Elements (1) mindestens 2 %, vorzugsweise mindestens 5 % und/oder höchstens 50 % beträgt.

7. Mikroskopanordnung gemäß einem der vorhergehenden Ansprüche, wobei das diffraktive optische Element (1) eine reflektierende Oberflächenbeschichtung (1.1) aufweist.

8. Mikroskopanordnung gemäß Anspruch 7, wobei die Oberflächenbeschichtung eine oder zwei oder drei oder vier oder fünf Materiallagen (1.2) umfasst und/oder wobei die Oberflächenbeschichtung (1.1) $MgF_2$ oder $Al_2O_3$ oder $Ta_2O_5$ enthält, wobei insbesondere Materiallagen (1.2) vorgesehen sind, die jeweils aus einem dieser Materialien bestehen.

9. Mikroskopanordnung gemäß einem der vorhergehenden Ansprüche, wobei das diffraktive optische Element (1) aus Glas, insbesondere Quarzglas, gefertigt ist.

10. Mikroskopanordnung gemäß einem der vorhergehenden Ansprüche, wobei das diffraktive optische Element (1) ein Höhenprofil mit mindestens 2 verschiedenen Höhen (1.3, 1.4, 1.5) und/oder mit höchstens 16 verschiedenen Höhen aufweist, insbesondere mit genau 2 verschiedenen Höhen oder genau 3 verschiedenen Höhen oder genau 4 verschiedenen Höhen.

11. Mikroskopanordnung gemäß einem der vorhergehenden Ansprüche, wobei der Laser (2) eingerichtet ist, den Lichtstrahl (10) im sichtbaren Frequenzbereich oder im infraroten Frequenzbereich, insbesondere im nahinfraroten Frequenzbereich, zu erzeugen.

12. Mikroskopanordnung gemäß einem der vorhergehenden Ansprüche, wobei der Detektor (4) ein optisches System (5) umfasst und/oder wobei die Mikroskopanordnung weiterhin einen Strahlteiler umfasst.

13. Verfahren zum Messen einer Oberflächenstruktur einer Oberfläche einer Probe (100), insbesondere unter Verwendung einer Mikroskopanordnung gemäß einem der vorhergehenden Ansprüche, wobei

ein diffraktives optisches Element (1),
ein Laser (2) zum Erzeugen eines Lichtstrahls (10),
ein Probenhalter (8) und
ein Detektor (4) mit einem Sensor (6)
bereitgestellt werden,
wobei
die Probe (100) in dem Probenhalter (8) platziert wird,
ein Lichtstrahl (10) des Lasers (2) auf das diffraktive optische Element (1) geleitet wird und das diffraktive optische Element (1) derart ausgebildet ist und angeordnet wird, dass es einen Teil des Lichtstrahls (10) als aufgefächerte Messstrahlen (20) transmittiert, um auf der Oberfläche der Probe (100) einen Spot-Array (50) erzeugen,
das diffraktive optische Element (1) weiterhin derart ausgebildet ist, dass es einen weiteren Teil des Lichtstrahls (10) reflektiert, um mehrere Referenzstrahlen (30) zu bilden, wobei für jeden Messstrahl (20) des Spot-Arrays (50) ein Referenzstrahl (30) zur Erzeugung von Strahlenpaaren (40) gebildet wird,
wobei
die Probe (100) und das diffraktive optische Element (1) zueinander derart positioniert werden, dass mehrere von der Probe (100) durch das diffraktive optische Element (1) hindurch zurückgeworfene Messstrahlen (20) des Spot-Arrays (50) mit jeweils einem der Referenzstrahlen (30) ein überlagertes Strahlenpaar (40) bilden,
so dass die zurückgeworfenen Messstrahlen (20) mit den reflektierten Referenzstrahlen (30) auf dem Sensor (6) zwei koinzidierende Sets von Punkten erzeugen,
und wobei
sämtliche auf dem Sensor (6) des Detektors (4) auffallende Strahlenpaare räumlich voneinander getrennt registriert werden, und mittels des Detektors (4) Interferenzmuster (60) für jedes der derart überlagerten Strahlenpaare (40) aus zurückgeworfenem Messstrahl (20) und Referenzstrahl (30) erfasst werden.

14. Verfahren gemäß dem vorhergehenden Anspruch, wobei die Probe (100) während der Messung lateral und/oder axial bewegt wird und/oder wobei Komponenten der Mikroskopanordnung, insbesondere das diffraktive optische Element (1) umfassend, relativ zur Probe bewegt werden.

**Claims**

1. A microscope arrangement to measure a surface structure of a surface of a sample (100), comprising

   a diffractive optical element (1),
   a laser (2) to generate a light beam (10),
   a sample holder (8),
   a detector (4) with a sensor (6) and
   the sample (100),

   wherein

   the sample (100) is placed in the sample holder (8), **characterised in that** the diffractive optical element (1) is configured and arranged in the beam path of the light beam (10) and relative to the sample (100) such that it transmits part of the light beam (10) as fanned-out measuring beams (20) which produce a spot array (50) on the surface of the sample (100),
   the diffractive optical element (1) is further configured such that it reflects a further part of the light beam (10) to form multiple reference beams (30), wherein a reference beam (30) is formed for each measuring beam (20) of the spot array (50) to generate beam pairs (40),
   wherein the sample (100) and the diffractive optical element (1) are positioned relative to each other such that several measuring beams (20) reflected back through the diffractive optical element (1) from the sample (100) form a superimposed beam pair (40) with one of the reference beams (30), respectively,
   so that the reflected measuring beams (20) and the reflected reference beams (30) produce two coinciding sets of points on the sensor (6),
   and wherein
   the detector (4) is configured and arranged to register all beam pairs hitting the sensor (6) spatially separated from one another, and to detect interference patterns (60) for each of the superimposed beam pairs (40) from the reflected measuring beam (20) and reference beam (30).

2. A microscope arrangement according to claim 1, wherein a distance between adjacent spots of the spot array (50) is at most 1 mm and/or at least 1 $\mu$m and/or wherein the spot array (50) comprises at least 50, preferably at least 100 spots, particularly preferably at least 200 spots.

3. A microscope arrangement according to one of the preceding claims, wherein all beam pairs are detected simultaneously by the detector (4).

4. A microscope arrangement according to one of the preceding claims, wherein the spots of the spot array (50) are arranged in a line or in a rectangular grid or in a triangular grid or in a hexagonal grid or in a Nipkow disc.

5. A microscope arrangement according to one of the preceding claims, wherein the diffractive optical element (1) is manufactured using the Rayleigh-Sommerfeld integral method.

6. A microscope arrangement according to one of the preceding claims, wherein a degree of reflection of the diffractive optical element (1) is at least 2%, preferably at least 5% and/or at most 50%.

7. A microscope arrangement according to one of the preceding claims, wherein the diffractive optical element (1) has a reflective surface coating (1.1).

8. A microscope arrangement according to claim 7, wherein the surface coating comprises one or two or three or four or five material layers (1.2) and/or wherein the surface coating (1.1) contains MgF2 or Al2O3 or Ta2O5, wherein particularly material layers (1.2) are provided, each consisting of one of these materials.

9. A microscope arrangement according to one of the preceding claims, wherein the diffractive optical element (1) is made of glass, particularly quartz glass.

10. A microscope arrangement according to one of the preceding claims, wherein the diffractive optical element (1) has a height profile with at least 2 different heights (1.3, 1.4, 1.5) and/or with at most 16 different heights, particularly with exactly 2 different heights or exactly 3 different heights or exactly 4 different heights.

11. A microscope arrangement according to one of the preceding claims, wherein the laser (2) is configured to generate the light beam (10) in the visible frequency range or in the infrared frequency range, particularly in the near-infrared frequency range.

12. A microscope arrangement according to one of the preceding claims, wherein the detector (4) comprises an optical system (5) and/or wherein the microscope arrangement further comprises a beam splitter.

13. A method for measuring a surface structure of a surface of a sample (100), particularly using a microscope arrangement according to one of the preceding claims, wherein

a diffractive optical element (1),
a laser (2) to generate a light beam (10),

a sample holder (8) und
a detector (4) with a sensor (6)
are provided,
wherein
the sample (100) is placed in the sample holder (8),
a light beam (10) from the laser (2) is directed onto the diffractive optical element (1) and the diffractive optical element (1) is configured and arranged such that it transmits part of the light beam (10) as fanned-out measuring beams (20) in order to generate a spot array (50) on the surface of the sample (100),
the diffractive optical element (1) is further configured such that it reflects a further part of the light beam (10) to form multiple reference beams (30), wherein a reference beam (30) is formed for each measuring beam (20) of the spot array (50) to generate beam pairs (40),
wherein
the sample (100) and the diffractive optical element (1) are positioned relative to each other such that several measuring beams (20) of the spot array (50) reflected back from the sample (100) through the diffractive optical element (1) form a superimposed beam pair (40) with one of the reference beams (30), respectively,
so that the reflected measuring beams (20) and the reflected reference beams (30) produce two coinciding sets of points on the sensor (6), and wherein
all beam pairs hitting the sensor (6) of the detector (4) are registered spatially separated from one another, and interference patterns (60) are detected via the detector (4) for each of the superimposed beam pairs (40) from the reflected measuring beam (20) and reference beam (30).

14. A method according to the preceding claim, wherein the sample (100) is moved laterally and/or axially during the measurement and/or wherein components of the microscope arrangement, particularly comprising the diffractive optical element (1), are moved relative to the sample.

## Revendications

1. Agencement de microscope permettant de mesurer une structure de surface d'une surface d'un échantillon (100), comprenant

un élément optique diffractif (1),
un laser (2) permettant de générer un faisceau lumineux (10),
un porte-échantillon (8),
un détecteur (4) comprenant un capteur (6) et l'échantillon (100),

dans lequel

l'échantillon (100) est placé dans le porte-échantillon (8), **caractérisé en ce que** l'élément optique diffractif (1) est réalisé et agencé dans le trajet du faisceau lumineux (10) et par rapport à l'échantillon (100) de telle manière qu'il transmet une partie du faisceau lumineux (10) sous forme de faisceaux de mesure (20) en éventail qui génèrent un réseau de spots (50) sur la surface de l'échantillon (100),
l'élément optique diffractif (1) est en outre réalisé de telle manière qu'il réfléchit une autre partie du faisceau lumineux (10) afin de former plusieurs faisceaux de référence (30), dans lequel un faisceau de référence (30) est formé pour chaque faisceau de mesure (20) du réseau de spots (50) afin de générer des paires de faisceaux (40),
dans lequel l'échantillon (100) et l'élément optique diffractif (1) sont positionnés l'un par rapport à l'autre de telle manière que plusieurs faisceaux de mesure (20) renvoyés par l'échantillon (100) à travers l'élément optique diffractif (1) forment avec respectivement un des faisceaux de référence (30) une paire de faisceaux (40) superposés,
de sorte que les faisceaux de mesure (20) renvoyés génèrent sur le capteur (6), avec les faisceaux de référence (30) réfléchis, deux ensembles de points qui coïncident,
et dans lequel
le détecteur (4) est configuré et agencé pour enregistrer séparément les unes des autres dans l'espace toutes les paires de faisceaux incidents sur le capteur (6), et pour détecter à partir du faisceau de mesure (20) et du faisceau de référence (30) renvoyés des modèles d'interférence (60) pour chacune des paires de faisceaux (40) ainsi superposées.

2. Agencement de microscope selon la revendication 1, dans lequel une distance entre des spots adjacents du réseau de spots (50) est d'au plus 1 mm et/ou d'au moins 1 $\mu$m et/ou dans lequel le réseau de spots (50) comprend au moins 50 spots, de préférence au moins 100 spots, de manière particulièrement préférée au moins 200 spots.

3. Agencement de microscope selon l'une quelconque des revendications précédentes, dans lequel toutes les paires de faisceaux sont détectées simultanément par le détecteur (4).

4. Agencement de microscope selon l'une quelconque des revendications précédentes, dans lequel les spots du réseau de spots (50) sont agencés sur une ligne ou dans une grille rectangulaire ou dans une grille triangulaire ou dans une grille hexagonale ou dans un disque de Nipkow.

5. Agencement de microscope selon l'une quelconque des revendications précédentes, dans lequel l'élément optique diffractif (1) est fabriqué en utilisant la méthode de l'intégrale de Rayleigh-Sommerfeld.

6. Agencement de microscope selon l'une quelconque des revendications précédentes, dans lequel un facteur de réflexion de l'élément optique diffractif (1) est d'au moins 2 %, de préférence d'au moins 5 % et/ou d'au plus 50 %.

7. Agencement de microscope selon l'une quelconque des revendications précédentes, dans lequel l'élément optique diffractif (1) présente un revêtement de surface (1.1) réfléchissant.

8. Agencement de microscope selon la revendication 7, dans lequel le revêtement de surface comprend une ou deux ou trois ou quatre ou cinq couches de matériau (1.2) et/ou dans lequel le revêtement de surface (1.1) contient du MgF2 ou du Al2O3 ou du Ta2O5, dans lequel des couches de matériau (1.2) sont en particulier prévues, qui sont respectivement constituées de l'un desdits matériaux.

9. Agencement de microscope selon l'une quelconque des revendications précédentes, dans lequel l'élément optique diffractif (1) est fabriqué en verre, en particulier en verre de quartz.

10. Agencement de microscope selon l'une quelconque des revendications précédentes, dans lequel l'élément optique diffractif (1) présente un profil de hauteur avec au moins 2 hauteurs (1.3, 1.4, 1.5) différentes et/ou avec au plus 16 hauteurs différentes, en particulier avec exactement 2 hauteurs différentes ou exactement 3 hauteurs différentes ou exactement 4 hauteurs différentes.

11. Dispositif de microscope selon l'une quelconque des revendications précédentes, dans lequel le laser (2) est configuré pour générer le faisceau lumineux (10) dans le domaine fréquentiel visible ou dans le domaine fréquentiel de l'infrarouge, en particulier dans le domaine fréquentiel du proche infrarouge.

12. Agencement de microscope selon l'une quelconque des revendications précédentes, dans lequel le détecteur (4) comprend un système optique (5) et/ou dans lequel l'agencement de microscope comprend en outre un diviseur de faisceau.

13. Procédé de mesure d'une structure de surface d'une surface d'un échantillon (100), en particulier en utilisant un agencement de microscope selon l'une quelconque des revendications précédentes, dans lequel

un élément optique diffractif (1),
un laser (2) permettant de générer un faisceau lumineux (10),
un porte-échantillon (8) et
un détecteur (4) comprenant un capteur (6) sont fournis,

dans lequel

l'échantillon (100) est placé dans le porte-échantillon (8),
un faisceau lumineux (10) du laser (2) est dirigé sur l'élément optique diffractif (1) et l'élément optique diffractif (1) est réalisé et est agencé de telle manière qu'il transmet une partie du faisceau lumineux (10) sous forme de faisceaux de mesure en éventail (20) afin de générer un réseau de points (50) sur la surface de l'échantillon (100),
l'élément optique diffractif (1) est en outre réalisé de telle manière qu'il réfléchit une autre partie du faisceau lumineux (10) afin de former plusieurs faisceaux de référence (30), dans lequel un faisceau de référence (30) est formé pour chaque faisceau de mesure (20) du réseau de spots (50) afin de générer des paires de faisceaux (40),
dans lequel
l'échantillon (100) et l'élément optique diffractif (1) sont positionnés l'un par rapport à l'autre de telle manière que plusieurs faisceaux de mesure (20) du réseau de spots (50) renvoyés par l'échantillon (100) à travers l'élément optique diffractif (1) forment avec respectivement un des faisceaux de référence (30) une paire de faisceaux (40) superposés,
de sorte que les faisceaux de mesure (20) renvoyés génèrent sur le capteur (6), avec les faisceaux de référence (30) réfléchis, deux ensembles de points qui coïncident,
et dans lequel
toutes les paires de faisceaux frappant le capteur (6) du détecteur (4) sont enregistrées séparément dans l'espace et des motifs d'interférence (60) sont détectés au moyen du détecteur (4) à partir du faisceau de mesure (20) et du faisceau de référence (30) renvoyés pour chacune des paires de faisceaux (40) ainsi superposées.

14. Procédé selon la revendication précédente, dans lequel l'échantillon (100) est déplacé de manière latérale et/ou axiale pendant la mesure et/ou dans lequel des composants de l'agencement de microscope, y compris en particulier l'élément optique diffractif (1), sont déplacés par rapport à l'échantillon.

Fig. 1a

Fig. 1b

Fig. 2a

Fig. 2b

**Fig. 3a**

**Fig. 3b**

**Fig. 3c**

**Fig. 3d**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10223581 A1
- US 2011279823 A1

**In der Beschreibung aufgeführte Nicht-Patentliteratur**

- **Z. LI et al.** Application of DOE in confocal microscopy for surface measurement. *Photonics and Education in Measurement Science*, 2019
- **ZHANG GUOWEI et al.** Improvements of diffractive optical element uniformity and zero order performance using lithographic process parameter optimization method. *Enhanced and Synthetic Vision*, 21 April 2003